# EUROPÄISCHE PATENTSCHRIFT

(11) **EP 3 578 319 B1**
(45) Veröffentlichungstag und Bekanntmachung des Hinweises auf die Patenterteilung: **20.01.2021**
(21) Anmeldenummer: 18176457.2
(22) Anmeldetag: 07.06.2018
(51) Int. Cl.: B25J 9/16, G05B 19/4061

(54) **VERFAHREN ZUM ABSICHERN EINER GEFAHRENSTELLE**
METHOD FOR SECURING A HAZARDOUS AREA
PROCÉDÉ DE SÉCURISATION D'UN ENDROIT DANGEREUX

(43) Veröffentlichungstag der Anmeldung: 11.12.2019
(73) Patentinhaber: SICK AG, 79183 Waldkirch (DE)
(72) Erfinder: Braune, Ingolf, 79194 Gundelfingen (DE); Hornung, Armin, 79312 Emmendingen (DE); Neubauer, Matthias, 79102 Freiburg (DE)

(56) Entgegenhaltungen:
- EP-A1- 2 023 160
- EP-A1- 3 217 195
- EP-B1- 1 635 107
- MISEIKIS JUSTINAS ET AL: "Multi 3D camera mapping for predictive and reflexive robot manipulator trajectory estimation", 2016 IEEE SYMPOSIUM SERIES ON COMPUTATIONAL INTELLIGENCE (SSCI), IEEE, 6. Dezember 2016 (2016-12-06), Seiten 1-8, XP033066633, DOI: 10.1109/SSCI.2016.7850237 [gefunden am 2017-02-09]
- Norbert Elkmann ET AL: "Arbeitssystem der Zukunft - Mensch-Roboter Arbeitsplatz" In: "Produktion und Logistik mit Zukunft: Digital Engineering and Operation", 15 December 2015 (2015-12-15), Springer Vieweg, Berlin, Heidelberg, Deutschland, XP55641021, pages 55-59,

## Beschreibung

Die Erfindung betrifft ein Verfahren zum Absichern mindestens einer Gefahrenstelle mit einer gefahrbringenden Maschine sowie einen 3D-Sensor zum Überwachen einer Umgebung mindestens einer Gefahrenstelle nach dem Oberbegriff von Anspruch 1 beziehungsweise 10.

Das primäre Ziel der Sicherheitstechnik ist, Personen vor Gefahrenquellen zu schützen, wie sie beispielsweise Maschinen im industriellen Umfeld darstellen. Die Maschine wird mit Hilfe von Sensoren überwacht, und wenn demnach eine Situation vorliegt, in der eine Person gefährlich nahe an die Maschine zu gelangen droht, wird eine geeignete Absicherungsmaßnahme ergriffen.

Für die Überwachung werden unter anderem 3D-Sensoren eingesetzt. Dazu zählen zunächst 3D-Kameras in unterschiedlichen Technologien, beispielsweise Stereoskopie, Triangulation, Lichtlaufzeit oder Auswertung der Störung passiver zweidimensionaler Muster oder von projizierten Beleuchtungsmustern. Solche 3D-Sensoren nehmen im Gegensatz zu einer üblichen zweidimensionalen Kamera Bilder auf, die in ihren Pixeln einen Abstandswert enthalten. Diese tiefenaufgelösten oder dreidimensionalen Bilddaten werden auch als Tiefenkarte bezeichnet. Weiterhin bekannt sind in zwei oder allen drei Richtungen abtastende Laserscanner, die über die jeweiligen Abtastwinkel und die gemessene Entfernung ebenfalls dreidimensionale Bilddaten erfassen. Der im Vergleich zu einer zweidimensionalen Bilderfassung höhere Geräte- und Auswertungsaufwand zur Erzeugung von dreidimensionalen Bilddaten wird in vielen Anwendungen durch die Zusatzinformationen gerechtfertigt.

In der Sicherheitstechnik beziehungsweise für den Personenschutz eingesetzte Sensoren müssen besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile.

Das gängige Absicherungskonzept sieht vor, dass Schutzfelder konfiguriert werden, die während des Betriebs der Maschine vom Bedienpersonal nicht betreten werden dürfen. Erkennt der Sensor einen unzulässigen Schutzfeldeingriff, etwa ein Bein einer Bedienperson, so löst er einen sicherheitsgerichteten Halt der Maschine aus. In einigen Fällen werden den Schutzfeldern zusätzliche Warnfelder vorgelagert, um eine Person noch rechtzeitig an einer Schutzfeldverletzung zu hindern oder um vorsorglich die Arbeitsgeschwindigkeit der Maschine zu verringern. Schutzfelder müssen, um allen denkbaren Fällen gerecht zu werden, relativ groß ausgelegt werden, so dass es vergleichsweise früh zu einer Systemreaktion kommt, welche die Produktivität reduziert.

Schutzfelder lassen außerdem keine enge Zusammenarbeit mit Maschinen zu, insbesondere mit Robotern (MRK, Mensch-Roboter-Kollaboration). Relevante Normen in diesem Zusammenhang sind beispielsweise die ISO 10218 für Industrieroboter oder die ISO 15066 für kollaborierende Roboter. In der MRK sollten Sicherheitsabstände möglichst klein und eventuell sogar situationsangepasst konfiguriert werden, natürlich unter der Vorgabe, dass die Sicherheit gewährleistet bleibt. Die Normen ISO 13854, ISO 13855, ISO 13857 befassen sich mit der Festlegung von Sicherheitsabständen.

Eine Bewertung von Objekten und Maschinen bezüglich Geschwindigkeit und gegenseitiger Entfernung wird in den genannten Roboternormen als "Speed and Separation Monitoring" bezeichnet. Dabei wird zweckmäßigerweise nicht der Abstand zu der Maschine selbst berechnet. Das wäre zu komplex und dynamisch, und es soll auch ein ausreichender Sicherheitsabstand zu künftigen Maschinenpositionen eingehalten werden. Deshalb ist es sinnvoll, eine Gefahrenstelle vorzugeben, welche die Maschine umgibt, also einen Raumbereich oder ein Volumen, innerhalb dessen die Maschine Arbeitsbewegungen ausführt. Eine Gefahrenstelle um sämtliche Maschinenpositionen, welche die Maschine in ihrem Arbeitsablauf erreicht, muss aber regelmäßig so groß ausgelegt werden, dass immer noch keine enge Zusammenarbeit zwischen Mensch und Maschine möglich ist.

Die DE 10 2005 054 359 A1 betrifft eine Schutzeinrichtung für ein Fahrzeug mit einem optischen Sensor. Durch Ortung von Objekten mittels des optischen Sensors werden Fahrtrichtung und Geschwindigkeit bestimmt, und in Abhängigkeit von diesen Messgrößen wird aus mehreren abgespeicherten Schutzfeldern eines ausgewählt. In der WO 2015/177 188 A1 sind zumindest zwei verschiedene Gefahrenzonen für eine Erntemaschine definiert, unter denen abhängig von Fahrparametern eine ausgewählt wird.

Aus der EP 2 023 160 A1 ist eine dreidimensionale Raumüberwachung mit einem Konfigurationsmodus zum Bestimmen der Schutzfelder bekannt. Dabei ist auch möglich, mehrere Schutzfeldkonfigurationen einzulernen und im Betrieb jeweils eine Schutzfeldkonfiguration auszuwählen und anzuwenden.

In der DE 10 2007 014 612 A1 werden Gefahrenzonen an einer kraftgetriebenen Textilmaschine überwacht. Durch selektive Aktivierung von ortsfesten Überwachungsmitteln kann ein dynamisch ortsveränderlicher Schutzbereich gebildet werden.

Die EP 1 635 107 B1 nutzt von einer Maschinensteuerung übergebene Parameter für die Festlegung eines als Gefahrenbereich bezeichneten Schutzfeldes.

In der EP 2 315 052 B1 wird ein bestimmtes Gefährdungsobjekt anhand seiner Geometrie oder seines Bewegungsverhaltens erkannt. Es werden dann Schutzfelder an die Bewegung dieses Gefährdungsobjekts angepasst, oder es wird zwischen mehreren Schutzfeldkonfigurationen umgeschaltet.

Die EP 2 395 274 B1 legt Sicherheitszonen abhängig von dem Bewegungsverhalten eines Objekts in einer Betriebszone fest.

Die genannten Dokumente verfolgen somit diverse Ansätze, um Schutzfelder dynamisch anzupassen, aber die grundsätzlichen Nachteile von Schutzfeldern lassen sich damit nicht überwinden und werden auch gar nicht angesprochen.

Die EP 3 200 122 A1 offenbart einen 3D-Sensor mit sicherer Erkennung von Objekten, bei dem die Tiefenkarte mit einem feinen und einem groben Detektionsvermögen ausgewertet wird. Fein erfasste Objekte innerhalb einer Umgebung eines grob erfassten Objekts werden diesem zugeschlagen, isolierte fein erfasste Objekte als Störung ignoriert. Das ermöglicht, nachgelagert bestimmte kleine Objekte noch als nicht sicherheitsrelevant auszufiltern, trägt aber ansonsten nicht dazu bei, die Absicherung mit Gefahrenstellen voranzubringen.

Es ist daher Aufgabe der Erfindung, die Absicherung einer Gefahrenstelle mit einem 3D-Sensor zu verbessern.

Diese Aufgabe wird durch ein Verfahren zum Absichern mindestens einer Gefahrenstelle mit einer gefahrbringenden Maschine sowie mindestens einen 3D-Sensor zum Überwachen einer Umgebung mindestens einer Gefahrenstelle nach Anspruch 1 beziehungsweise 10 gelöst. Eine Gefahrenstelle ist ein Raumbereich, die mindestens eine Maschine absichert, damit niemand von der Maschine verletzt wird. Demnach dürfen sich Personen dort nicht aufhalten, weil es sonst zu einem Unfall kommt. Dazu liegt bevorzugt die Maschine zumindest teilweise in der Gefahrenstelle. Eine Gefahrenstelle darf nicht mit einem Schutzfeld verwechselt werden, das nämlich der Gefahrenstelle vorgelagert ist, um eine Annäherung von Personen an die Gefahrenstelle zu verhindern. Ein Schutzfeld ist in aller Regel im Gegensatz zu der Gefahrenstelle frei von jeglichen beweglichen Maschinenteilen.

Im Betrieb überwacht ein 3D-Sensor die Umgebung der Gefahrenstelle, damit niemand von der Maschine verletzt wird. Die erfassten Objekte werden in Bezug auf die Gefahrenstelle bewertet. Liegt demnach eine gefährliche Situation vor, so wird eine sicherheitsgerichtete Reaktion der Maschine ausgelöst. Zumindest die endgültige Einstufung, ob das erforderlich ist, trifft vorzugsweise nicht der 3D-Sensor selbst, sondern eine daran angeschlossene Steuerung auf Basis der von dem 3D-Sensor erfassten Objekte beziehungsweise daraus abgeleiteter Größen.

Die Erfindung geht von dem Grundgedanken aus, durch Umschalten zwischen Gefahrenstellen dem Arbeitsablauf der Maschine zu folgen. Der Arbeitsablauf der Maschine umfasst auch die Zusammenarbeit mehrerer Maschinen, etwa indem eine Maschine ihre Arbeit unterbricht und eine andere Maschine den Arbeitsablauf fortsetzt. Um dabei die jeweils neu abzusichernden Gefahrenstellen sicher zu aktivieren, wird dabei geprüft, ob sie frei von Objekten sind. Damit sind, wie später noch diskutiert, relevante Objekte gemeint, was nicht mit jeglichen überhaupt erfassten Objekten übereinstimmen muss. In den jeweils neu abzusichernden Gefahrenstellen befinden sich noch keine gefahrbringenden Maschinenteile, weil diese sich erst für den nächsten Arbeitsschritt dorthin bewegen. Das wiederum ist erst erlaubt, wenn dadurch keine Gefahr ausgelöst wird, also die Prüfung ergeben hat, dass die neu abzusichernde Gefahrenstelle objektfrei ist. Es kann mehrere Gefahrenstellen geben, um unterschiedliche Maschinenteile oder eine Umgebung davon sowie mehrere Maschinen abzusichern.

Die Erfindung hat den Vorteil, dass durch Aufgeben der herkömmlichen, an worst-case-Szenarien orientierten Schutzfelder, eine eng an den jeweiligen Arbeitsschritt angepasste Absicherung ermöglicht wird. Gefahrenstellen können schon vorab in einer Konfiguration modelliert und damit vorberechnet, beispielsweise aus einfachen geometrischen Körpern zusammengesetzt werden. Zur Laufzeit werden jeweils nur die aktuell im Prozessablauf benötigten Gefahrenstellen aktiviert, und damit wird eine dynamische Reaktion entsprechend der aktuellen Gefährdung ermöglicht. Das erhöht die Produktivität in vielerlei Hinsicht. Es ist nur noch eine minimale Versiegelung von Produktionsflächen für Sicherheitsanforderungen erforderlich. Mit dem reduzierten Flächenverbrauch wird auch der Abstand des Werkers zur Gefahrenstelle optimiert und eine engere Kooperation mit der Maschine ermöglicht. Unnötige Nothalte der Maschine werden verhindert.

Zugleich ist der Kommunikationsaufwand zwischen 3D-Sensor und Maschinensteuerung beziehungsweise einer dazwischen geschalteten weiteren Steuerung gering. Es müssen im Betrieb lediglich Aktivierungskommandos für die vorbereiteten Gefahrenstellen übertragen werden, keineswegs komplexe 3D-Geometrien der Gefahrenstellen, und es ist auch kein fortwährender Austausch von Maschinenpositionen erforderlich. Deshalb können bisher gebräuchliche sichere Feldbusprotokolle zur Kommunikation genutzt werden.

Der 3D-Sensor ist vorzugsweise eine 3D-Kamera, die zunächst jede bekannte Technik verwenden kann, wie ein Lichtlaufzeitprinzip mit direkter Laufzeitmessung von Lichtsignalen oder Phasenmessung oder eine Entfernungsschätzung aus Helligkeiten oder Fokuslagen (DFF, Depth from Focus, DFD, Depth from Defocus). Besonders bevorzugt, nutzt die 3D-Kamera aber ein Triangulationsprinzip, bei dem zwei Kamerabilder einer bewegten Kamera oder einer Stereokamera untereinander korreliert werden, oder alternativ ein Beleuchtungsmuster mit einem Kamerabild korreliert wird, um so Disparitäten zu schätzen und daraus Abstände zu bestimmen. Auch ein Laserscanner ist ein 3D-Sensor, denn er erzeugt 3D-Punktwolken, die bei einem klassischen Laserscanner auf eine Abtastebene beschränkt sind. Durch in Elevation bewegte Abtastung oder mehrere in Elevation versetzte Abtaststrahlen entfällt diese Beschränkung bei einem Laserscanner. Durch den Einsatz mehrerer 3D-Sensoren kann der Sichtbereich erweitert werden, beziehungsweise die 3D-Sensoren ergänzen einander in ihrer Perspektive. Hybridanordnung mit unterschiedlichen 3D-Sensoren oder sonstigen Sensoren, wie einem Lichtgitter, sind ebenfalls denkbar.

Der 3D-Sensor ist bevorzugt für ein Detektionsvermögen ausgelegt, bei dem Objekte ab einer Mindestgröße sicher erfasst werden. Das Detektionsvermögen ist eine spezifizierte Eignung eines im Sinne der einleitenden oder vergleichbarer Normen sicheren Sensors, Objekte einer Mindestgröße im gesamten Überwachungsbereich sicher zu erfassen. Die entsprechende Auslegung des 3D-Sensors betrifft seinen Aufbau, also seine Optik, seinen Lichtempfänger und weitere mögliche, noch nicht genannte Komponenten wie etwa eine Beleuchtung, sowie die sichere Auswertung. Das Detektionsvermögen schließt erst einmal nicht aus, dass auch kleinere Objekte erfasst werden. Für Objekte, die kleiner sind als die Mindestgröße, ist aber der Schutz nicht garantiert, beispielsweise wird ein Finger bei einem für Armschutz ausgelegten 3D-Sensor nicht sicher erfasst. Deshalb werden Objekte kleiner als die Mindestgröße möglicherweise mittels Filtern in der Auswertung ausgeschlossen. Es ist auch möglich, eine Mindestgröße oberhalb des Detektionsvermögens zu wählen, also eine an sich bereitgestellte Auflösung nicht auszunutzen. Als Zahlenbeispiele seien 14 mm für Fingerschutz oder im Bereich von 30-80 mm für den Schutz von Extremitäten genannt, insbesondere 55 mm für Oberarmschutz.

Der 3D-Sensor bestimmt den kürzesten Abstand zwischen Gefahrenstelle und Objekten und gibt dies an eine Steuerung aus, die anhand des kürzesten Abstands entscheidet, ob eine sicherheitsgerichtete Reaktion der Maschine erfolgt. Der 3D-Sensor erkennt dabei nicht nur automatisch Objekte in der Umgebung der Gefahrenstelle, sondern ermittelt auch Abstände der erkannten Objekte zu der Gefahrenstelle. Da alle Gefahrenstellen bereits zur Konfigurationszeit bekannt sind, ergeben sich Möglichkeiten, Teile der Abstandsberechnung ebenfalls schon zur Konfigurationszeit vorauszuberechnen.

Sind mehrere Gefahrenstellen aktiv, so wird vorzugsweise für jede Gefahrenstelle der kürzeste Abstand zu einem von dem 3D-Sensor erfassten Objekt bestimmt. In einem 3D-Sensor-Verbund mit mehreren 3D-Sensoren werden Erfassungsdaten geeignet fusioniert. Das kann insbesondere erst auf Ebene kürzester Abstände geschehen, jeder 3D-Sensor arbeitet dann bis zu einem sehr späten Verarbeitungsstadium weitgehend autark. Alternativ können auch bereits die Messdaten vereinigt und gemeinsam ausgewertet werden.

Von dem 3D-Sensor werden also vorzugsweise nur die kürzesten Abstände über eine sichere Ausgabeschnittstelle bereitgestellt, und die weitere Beurteilung, ob eine Gefahr droht, erfolgt auf dieser Basis in einer angeschlossenen Steuerung. Die Steuerung ist dem 3D-Sensor und der überwachten Maschine oder den überwachten Maschinen übergeordnet, oder es handelt sich um die Steuerung der Maschine selbst. Die Steuerung wertet die von dem 3D-Sensor gelieferten Abstände aus und leitet gegebenenfalls eine sicherheitsgerichtete Reaktion ein. Beispiele für eine Reaktion sind ein Nothalt, ein Abbremsen, ein Ausweichen oder ein Verbringen in eine sichere Position. Es ist denkbar, einen festen Mindestabstand vorzugeben, der etwa unter worst-case-Annahmen an Geschwindigkeiten oder aus bekannten oder vermessenen Nachlaufwegen bestimmt ist. Es sind auch dynamische Sicherheitsabstände unter anderem in Abhängigkeit von der aktuellen Geschwindigkeit der Maschine und des Objekts denkbar. In die Sicherheitsbewertung können Daten der Steuerung der Maschine einfließen. Mit dem kürzesten Abstand können zusätzliche Informationen ausgeben werden, wie die Geschwindigkeit des nächsten Objekts, und in die Sicherheitsbewertung einfließen.

Eine sichere Ausgabeschnittstelle ist auch herkömmlich vorgesehen, wird aber nur genutzt, um ein binäres Signal auszugeben, ob eine Schutzfeldverletzung vorliegt (OSSD, Output Signal Switching Device). In bevorzugten Ausführungsformen mit Ausgabe eines kürzesten Abstands zur Gefahrenstelle werden nicht mehr Schutzfelder überwacht und auch nicht mehr durch den 3D-Sensor selbst binäre Absicherungssignale erzeugt und ausgegeben. Stattdessen wird die dafür erforderliche Information sicher, sehr kompakt und leicht zugänglich bereitgestellt. Der jeweils aktuelle kürzeste Abstand wird anstelle des bisher üblichen binären Absicherungssignals an der folglich nicht mehr als OSSD ausgestalteten sicheren Ausgabeschnittstelle für eine angeschlossene Steuerung zur Verfügung gestellt. Diese Steuerung, etwa die übergeordnete Steuerung einer Roboterzelle oder auch die Steuerung des Roboters selbst, kann anhand des kürzesten Abstands sehr einfach feststellen, ob eine Gefahr besteht, und übernimmt die eigentliche Absicherungsfunktion selbst.

Dabei wird das Arbeiten beziehungsweise die Kooperation mit Maschinen wesentlich flexibler gestaltbar und eine rasche, individuelle Reaktion auf Menschen im Umfeld der Maschine ermöglicht. Ein Eingriff in ein Schutzfeld lässt in der Regel nur noch einen Nothalt zu, da Schutzfelder gerade so definiert sind, dass in einem solchen Fall eine aufgrund des binären Abschaltsignals nicht mehr differenzierte Unfallgefahr besteht. Durch Überwachung von kürzesten Abständen sind jedoch auch mildere Eingriffe in den Prozessablauf möglich, die einen zeitaufwändigen Nothalt samt Wiederanlauf vermeiden und den Prozessablauf nach Möglichkeit ungestört weiterlaufen lassen oder die Annäherung eines Menschen in den Prozessablauf integrieren. Arbeitsschritte der Maschine können dabei rechtzeitig umgeplant werden.

Beim Umschalten wird bevorzugt mindestens eine bisher abzusichernde Gefahrenstelle deaktiviert. Das Umschalten auf eine neu abzusichernde Gefahrenstelle bedeutet, dass diese Gefahrenstelle aktiviert und dabei auf Objektfreiheit geprüft wird. Es ist zwar möglich, dass bei einem Umschaltvorgang nur aktive Gefahrenstellen hinzukommen. Vorzugsweise aber bedeutet Umschalten, dass nun zumindest zum Teil andere Gefahrenstellen abgesichert werden, demnach mindestens eine der bisherigen Gefahrenstellen deaktiviert wird, vorzugsweise als letzter Schritt des Umschaltens, nachdem die neu abzusichernden Gefahrenstellen aktiv sind. Beim Deaktivieren muss im Gegensatz zum Aktivieren weiter nichts beachtet werden. Es können so keine sicherheitskritischen Objekte übersehen werden, da der Raumbereich der deaktivierten Gefahrenstelle sofort als Umgebung der verbleibenden aktiven Gefahrenstellen überwacht wird. Zwar sollte das Deaktivieren zum Arbeitsprozess passen, sich also in der deaktivierten Gefahrenstelle kein bewegtes Maschinenteil mehr befinden. Falls das nicht zutrifft, ist aber die Sicherheit nicht beeinträchtigt, sondern nur die Verfügbarkeit, da möglicherweise das bewegte Maschinenteil zu nahe an einer noch aktiven Gefahrenstelle herankommt und dadurch eine an sich unnötige sicherheitsgerichtete Reaktion ausgelöst wird.

Bei der Erfassung von Objekten durch den 3D-Sensor werden bevorzugt Objekte in der Gefahrenstelle selbst ignoriert. Die Gefahrenstelle selbst wird also als frei von zu erfassenden Objekten angesehen, oder vielmehr als durch die Maschine blockiert. Tatsächlich wäre je nach Konfiguration durchaus Raum für zusätzliche Objekte in der Gefahrenstelle. Auch bildet die Maschine natürlich selbst ein Objekt, das zunächst von dem 3D-Sensor erfasst wird. All das wird aber absichtlich ignoriert und die Gefahrenstelle ausmaskiert beziehungsweise als leerer, von Objekten freier Block modelliert. Das vereinfacht die Überwachung und die Bestimmung kürzester Abstände, denn die Dynamik der Maschine innerhalb der Gefahrenstelle spielt so keine Rolle. Sicherheitstechnisch ist dies auch unproblematisch, denn jedes Objekt wird rechtzeitig erkannt, wenn es sich der Gefahrenstelle nähert. Wenn aber der Innenraum einer Gefahrenstelle nicht weiter überwacht wird, ist es umso wichtiger, bei einer Aktivierung von Gefahrenstellen zuvor die Objektfreiheit zu überprüfen.

Vorzugsweise werden auch Objekte in einem projektiven Verdeckungsbereich der Gefahrenstelle aus einer Zentralperspektive des 3D-Sensors ignoriert. Die Gefahrenstelle wird projektiv erweitert. Das betrifft den projektiven Abschattungsbereich, der aus Sicht des 3D-Sensors hinter der Gefahrenstelle liegt, aber auch einen Verdeckungsbereich auf der zugewandten Seite zwischen 3D-Sensor und Gefahrenstelle. Wird nämlich die Gefahrenstelle in dem Sinne rechentechnisch vorteilhaft ausmaskiert, dass Sichtstrahlen in der Gefahrenstelle insgesamt ignoriert werden, so ist der 3D-Sensor auch in dem Verdeckungsbereich blind. Durch geeignete Konfiguration von Gefahrenstellen, nämlich so, dass deren Außenflächen von mindestens einem 3D-Sensor eingesehen werden, können kürzeste Abstände dennoch zur Gefahrenstelle selbst berechnet werden, nicht zu deren projektiver Erweiterung, wodurch die Abstände nicht unnötig auf Kosten der Verfügbarkeit unterschätzt werden.

Die Prüfung, ob die neu abzusichernde Gefahrenstelle frei von Objekten ist, erstreckt sich vorzugsweise nicht auf einen Überlappungsbereich mit bisher abgesicherten Gefahrenstellen. Dadurch wird der jeweils zu überprüfende Bereich kleiner, es wird demnach Aufwand eingespart. Es genügt, die Prüfung auf Objektfreiheit auf den exklusiv von den neuen Gefahrenstellen eingenommenen Bereich zu beschränken. Die bisher aktiven Gefahrenstellen waren ständig überwacht, dort kann kein Objekt in gefährlicher Nähe oder gar eingedrungen sein.

Die Prüfung, ob die neu abzusichernde Gefahrenstelle frei von Objekten ist, schließt bevorzugt einen Sicherheitspuffer um die neu abzusichernde Gefahrenstelle ein, der aus einer benötigten Umschaltzeit und einer maximal angenommenen Objektgeschwindigkeit bestimmt wird. Der Bereich, der für die neu abzusichernde Gefahrenstelle auf Objektfreiheit überprüft wird, ist also gegenüber der eigentlichen neu abzusichernden Gefahrenstelle um eine Toleranz erweitert, die der benötigten Umschaltzeit und der maximalen Objektgeschwindigkeit Rechnung trägt. So wird verhindert, dass zwischen Prüfung auf Objektfreiheit und deren tatsächlich begonnener Überwachung ein Objekt unbemerkt in die neu abzusichernde Gefahrenstelle eindringt.

Erfindungsgemäß werden für Arbeitsschritte der Maschine mindestens zwei Konfigurationssätze von Gefahrenstellen vorgegeben, und für den jeweils zu vollziehenden nächsten Arbeitsschritt wird nacheinander auf die Gefahrenstellen des zugehörigen Konfigurationssatzes umgeschaltet. Die Arbeitsschritte der Maschine werden mit unterschiedlichen Gefahrenstellen abgesichert, und diese Gefahrenstellen werden vorab geeignet festgelegt und dann im Betrieb sequentiell durchgeschaltet, um den Prozess zu überwachen.

Zum Umschalten von Gefahrenstellen wird zunächst eine Aktivierungsanforderung an den 3D-Sensor gestellt, der daraufhin prüft, ob die neu abzusichernde Gefahrenstelle frei von Objekten ist und dies zurückmeldet, woraufhin nur bei freier neu abzusichernder Gefahrenstelle die Umschaltung erfolgt. Eine derartige Aktivierungssequenz mit Voranfrage und Bestätigung ist vor allem für einen Sensorverbund mit mehreren 3D-Sensoren vorteilhaft, in dem die Umschaltung nur erfolgen darf, wenn alle beteiligten 3D-Sensoren zustimmen. Ansonsten wären sich die 3D-Sensoren in einem undefinierten Zwischenzustand uneins, welche Gefahrenstellen aktiv sind. In der Aktivierungssequenz mit Voranfrage erfolgt so lange keine tatsächliche Umschaltung, wie noch mindestens ein 3D-Sensor ein Objekt im Bereich der neu abzusichernden Gefahrenstellen meldet. Solange muss das Umschalten verweigert oder die Anforderung zum Umschalten wiederholt werden. Das kann mit einem Warnhinweis verbunden werden, der beispielsweise einen Werker auffordert, eine neu abzusichernde Gefahrenstelle zu verlassen.

Vorzugsweise folgt, falls die neu abzusichernde Gefahrenstelle nicht frei von Objekten ist, ein alternativer nächster Arbeitsschritt der Maschine mit anderen abzusichernden Gefahrenstellen. Das ist eine Alternative zum Abwarten, bis die neu abzusichernde Gefahrenstelle objektfrei ist. Die Maschine versucht einen alternativen Arbeitsschritt, bei dem das Objekt nicht stört, das die Umschaltung auf die zunächst gewünschten neu abzusichernden Gefahrenstellen verhindert. Beispielsweise sucht sich die Maschine einen anderen Weg in eine neue Position für den nächsten Arbeitsschritt, oder sie arbeitet am alten Ort weiter, bis der Weg an den neuen Ort frei geworden ist.

Der erfindungsgemäße 3D-Sensor zum Überwachen einer Umgebung mindestens einer Gefahrenstelle mit einer gefahrbringenden Maschine weist mindestens einen Bildsensor zum Erfassen von dreidimensionalen Bilddaten sowie eine Steuer- und Auswertungseinheit auf, die dafür ausgebildet ist, Objekte in der Umgebung anhand der dreidimensionalen Bilddaten zu erfassen. Dabei sind diverse, oben schon genannte Ausführungsformen von 3D-Sensoren denkbar. In einem Speicher des 3D-Sensors sind mindestens zwei Konfigurationssätze von Gefahrenstellen gespeichert, und die Steuer- und Auswertungseinheit dafür ausgebildet ist, zwischen den Gefahrenstellen umzuschalten und dafür zu prüfen, ob eine neu abzusichernde Gefahrenstelle frei von Objekten ist. Das Absichern und Umschalten erfolgt vorzugsweise gemäß einer der beschriebenen Ausführungsformen des erfindungsgemäßen Verfahrens.

Die Steuer- und Auswertungseinheit ist bevorzugt dafür ausgebildet, auf eine Umschaltungsanforderung hin zu prüfen, ob eine neu abzusichernde Gefahrenstelle frei von Objekten ist und daraufhin eine Rückmeldung zu erzeugen, ob die Umschaltung derzeit möglich ist. Der 3D-Sensor ist dadurch in der Lage, beim Umschalten einer Aktivierungssequenz zu folgen, in der zunächst eine Umschaltanforderung nach erfolgreicher Prüfung auf Objektfreiheit bestätigt und dann tatsächlich umgeschaltet wird. So können mehrere 3D-Sensoren in einem Sensorverbund koordiniert werden.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Darstellung einer 3D-Kamera und ihres Überwachungsbereichs;
- Fig. 2: eine schematische Draufsicht auf eine überwachte Szenerie mit mehreren Gefahrenstellen;
- Fig. 3: eine Draufsicht ähnlich Figur 2 mit einer Person, welche momentan die Umschaltung von Gefahrenstellen verhindert;
- Fig. 4: ein beispielhaftes Ablaufdiagramm zur Umschaltung von Gefahrenstellen;
- Fig. 5a-b: schematische Darstellungen von zwei beispielhaften Konfigurationssätzen für Gefahrenstellen für zwei aufeinanderfolgende Arbeitsschritte;
- Fig. 6: eine überlagerte Darstellung der Gefahrenstellen gemäß Figuren 5a-b; und
- Fig. 7: eine Darstellung gemäß Figur 6 mit einem Objekt nahe einer Gefahrenstelle, um die Berücksichtigung der Bewegung von Objekten während des Umschaltens zu erläutern.

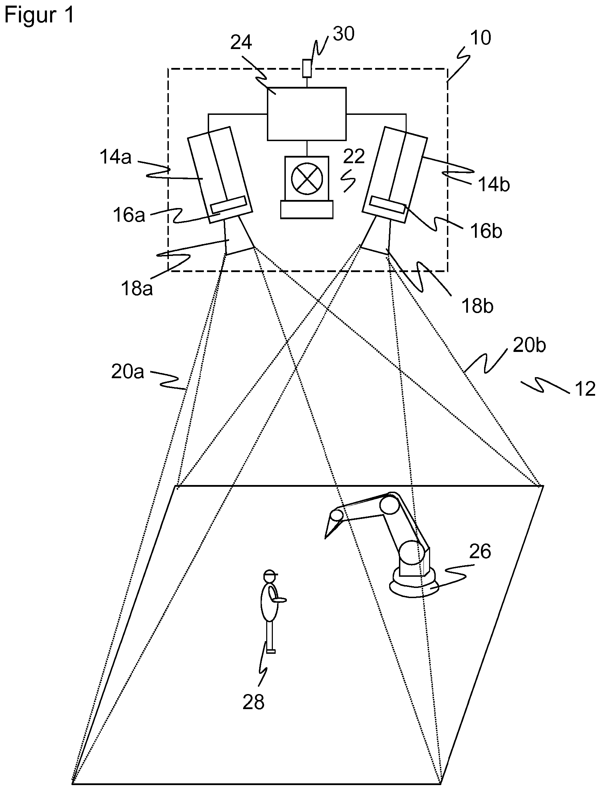

Figur 1 zeigt in einer schematischen dreidimensionalen Darstellung den allgemeinen Aufbau einer Stereokamera zur Aufnahme einer Tiefenkarte als Beispiel für einen erfindungsgemäßen 3D-Sensor 10, an dem die Erfassung von 3D-Bilddaten erläutert wird. Ebenso als 3D-Sensor 10 denkbar wären andere 3D-Kameras mit Erfassungsprinzipien wie Korrelation von Bild und projizierten Beleuchtungsmustern oder Bestimmung der Lichtlaufzeit sowie Laserscanner.

Zur Erfassung eines Raumbereichs 12 sind zwei Kameramodule 14a, 14b in einem bekannten festen Abstand zueinander montiert und nehmen jeweils Bilder des Raumbereichs 12 auf. In jeder Kamera ist ein Bildsensor 16a, 16b vorgesehen, üblicherweise ein matrixförmiger Aufnahmechip, der ein rechteckiges Pixelbild aufnimmt, beispielsweise ein CCD- oder ein CMOS-Sensor. Die beiden Bildsensoren 16a, 16b bilden gemeinsam einen 3D-Bildsensor zur Erfassung einer Tiefenkarte. Den Bildsensoren 16a, 16b ist je ein Objektiv 18a, 18b mit einer abbildenden Optik zugeordnet, welche in der Praxis als jedes bekannte Abbildungsobjektiv realisiert sein können. Der maximale Sichtwinkel dieser Optiken ist in Figur 1 durch gestrichelte Linien dargestellt, die jeweils eine Sichtpyramide 20a, 20b bilden.

Zwischen den beiden Bildsensoren 16a, 16b ist eine Beleuchtungseinheit 22 vorgesehen, um den Raumbereich 12 mit einem strukturierten Muster auszuleuchten. Die dargestellte Stereokamera ist demnach für aktive Stereoskopie ausgebildet, bei der das Muster auch einer an sich strukturlosen Szenerie überall auswertbare Kontraste aufprägt. Alternativ ist keine oder eine homogene Beleuchtung vorgesehen, um die natürlichen Objektstrukturen im Raumbereich 12 auszuwerten, was aber regelmäßig zu zusätzlichen Bildfehlern führt.

Mit den beiden Bildsensoren 16a, 16b und der Beleuchtungseinheit 22 ist eine Steuer- und Auswertungseinheit 24 verbunden. Die Steuer- und Auswertungseinheit 24 kann in verschiedenster Hardware implementiert sein, beispielsweise digitalen Bausteinen wie Mikroprozessoren, ASICs (Application Specific Integrated Circuit), FPGAs (Field Programmable Gate Array), GPUs (Graphics Processing Unit) oder Mischformen davon, die beliebig auf interne und externe Komponenten verteilbar sind, wobei externe Komponenten auch über Netzwerk oder eine Cloud eingebunden sein können, soweit Latenzen beherrscht oder toleriert werden können. Da das Erzeugen der Tiefenkarte und deren Auswertung sehr rechenintensiv sind, wird vorzugsweise eine zumindest teilweise parallele Architektur gebildet.

Die Steuer- und Auswertungseinheit 24 erzeugt mit Hilfe der Beleuchtungseinheit 22 das strukturierte Beleuchtungsmuster und empfängt Bilddaten der Bildsensoren 16a, 16b. Aus diesen Bilddaten berechnet sie mit Hilfe einer stereoskopischen Disparitätsschätzung die 3D-Bilddaten beziehungsweise die Tiefenkarte des Raumbereichs 12. Der gesamte erfassbare Raumbereich 12 oder auch Arbeitsbereich kann über eine Konfiguration eingeschränkt werden, beispielsweise um störende oder nicht notwendige Bereiche auszublenden.

Eine wichtige sicherheitstechnische Anwendung des 3D-Sensors 10 ist die Überwachung einer Maschine 26, die in der Figur 1 durch einen Roboter symbolisiert ist. Die Maschine 26 kann auch wesentlich komplexer sein als gezeigt, aus vielen Teilen bestehen oder sogar eigentlich eine Anordnung mehrerer Maschinen sein, etwa mehrerer Roboter oder Roboterarme. Der 3D-Sensor 10 ist für die sichere Detektion eines Objekts im Personenschutz vorzugsweise fehlersicher im Sinne von Sicherheitsnormen wie den einleitend genannten ausgelegt, insbesondere nach IEC 61496-4-3.

Für die Auswertung, wo sich ein als Person dargestelltes Objekt 28 in Bezug auf die Maschine 26 befindet, wird die Tiefenkarte in der Steuer- und Auswertungseinheit 24 vorzugsweise zunächst einigen Vorverarbeitungsschritten unterzogen, beispielsweise eine Ausblendung des bekannten Hintergrunds. Dann wird eine Erkennung der Objekte 28 im Raumbereich 12 durchgeführt, wobei Forderungen an relevante Objekte 28 gestellt sein können, etwa eine Mindestgröße entsprechend eines geforderten Detektionsvermögens. Auch Filter anhand eines Körpermodells für mehr Robustheit sind denkbar, etwa in der Form, dass wie in EP 3 200 122 A1 fein erfasste Objekte nur relevant sind, wenn sie sich in der Nähe eines grob erfassten Objekts befinden.

Anschließend wird unter den verbleibenden Objekten 28 der kürzeste Abstand von der Maschine 26 zum nächsten Objekt berechnet. Bei der Abstandsberechnung wird vorzugsweise der projektive Schatten des Objekts 28 berücksichtigt, beispielsweise indem der abgeschattete Bereich vorsichtshalber als durch ein Objekt belegt angenommen wird. Damit wird verhindert, dass ein sicherheitsrelevantes Objekt 28 in einem aus der Zentralperspektive des 3D-Sensors 10 nicht sichtbaren Abschattungsbereich übersehen wird. Der jeweils aktuelle kürzeste Abstand wird zyklisch oder azyklisch an einer sicheren Schnittstelle 30 bereitgestellt. Typische Ausgaberaten sind mehrmals pro Sekunde, es ist aber auch eine seltenere Aktualisierung denkbar, je nach geforderter und möglicher Ansprechzeit des 3D-Sensors 10.

Eine nicht dargestellte, an der sicheren Schnittstelle 30 angeschlossene übergeordnete Steuerung, insbesondere diejenige der Maschine 26, wertet den kürzesten Abstand zur Erfüllung einer Sicherheitsfunktion aus, zum Beispiel eines Speed-and-Separation Monitoring nach ISO/TS 15066, und vergleicht dazu den kürzesten Abstand mit einem erforderlichen Sicherheitsabstand etwa nach ISO 13855. Es wird dann erforderlichenfalls abhängig von dem kürzesten Abstand der nächsten Arbeitsschritt der Maschine 26 neu geplant oder im Gefährdungsfall eine sicherheitsgerichtete Reaktion eingeleitet, um beispielsweise die Maschine 26 anzuhalten, abzubremsen oder ausweichen zu lassen, so dass durchgehend der erforderliche Sicherheitsabstand zwischen Mensch und Maschine gewahrt bleibt. Die Reaktion kann neben dem kürzesten Abstand von weiteren Bedingungen wie den Geschwindigkeiten oder der Beschaffenheit von Objekt 28 und Maschinenbereich 26 der drohenden Kollision abhängen.

Nach der bisherigen Erläuterung wird die Maschine 26 selbst beobachtet und zu ihr der kürzeste Abstand bestimmt. Das geschieht aber in der Praxis aufgrund der unter Umständen sehr komplexen Gestalt und Dynamik nicht. Stattdessen wird die Maschine 26 erfindungsgemäß als sogenannte Gefahrenstellen modelliert.

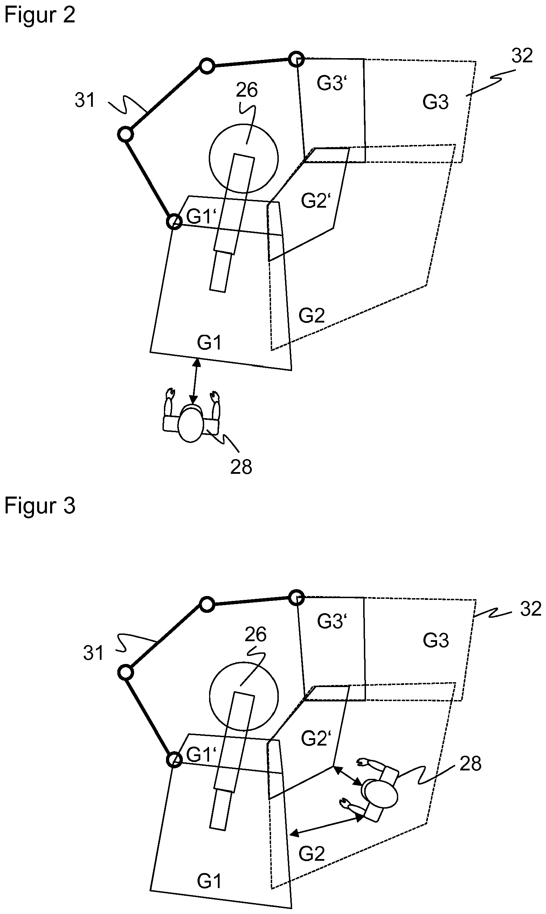

Figur 2 zeigt dazu sehr schematisch eine beispielhafte Szenerie in einer Draufsicht. Der überwachende 3D-Sensor 10, der im Übrigen zur Erweiterung des Sichtbereichs und/oder zum Gewinnen zusätzlicher Perspektiven auch ein Sensorverbund mit mehreren 3D-Sensoren 10 und/oder anderen Sensoren sein kann, ist nicht gezeigt. Ein rückwärtiger Bereich der Maschine 26 ist von dem 3D-Sensor 10 nicht einsehbar, jedenfalls nicht aus geeigneter Perspektive, und wird deshalb anderweitig abgesichert. Dargestellt ist eine physische Barriere 31, eine alternative Absicherung durch Lichtgitter oder sonstige Sensoren ist genauso vorstellbar.

Um die Maschine 26 herum beziehungsweise im nicht durch die physische Barriere 31 gesicherten Zugangsbereich sind beispielhaft mehrere Gefahrenstellen 32 konfiguriert, die mit G1, G1', G2, G2', G3 und G3' bezeichnet sind. Die Figur 2 zeigt nur eine Projektion, tatsächlich sind die Gefahrenstellen 32 Volumina oder Raumbereiche, in denen die Maschine 26 in einem jeweiligen Zeitabschnitt Arbeitsbewegungen ausführt. Die Gefahrenstellen 32 können die Maschine 26 mit etwas Abstand umgeben, um den Arbeitsbewegungen ausreichend Spiel zu lassen. Außerdem ist es für die Berechnungen vorteilhaft, geometrisch einfache Gefahrenstellen 32 zu definieren, wofür dann gewisse Leerräume in Kauf genommen werden. Im Beispiel der Figur 2 etwa könnten die gezeigten Polygonzüge mit senkrechten Außenflächen nach oben gezogen werden. Die konkrete Geometrie einer Gefahrenstelle 32 ist nicht auf diese Beispiele beschränkt. Gefahrenstellen 32 sollten so konfiguriert sein, dass der 3D-Sensor beziehungsweise der Sensorverbund sie tatsächlich sicher überwachen kann, aber die dafür erforderlichen Voraussetzungen und Konfigurationsmöglichkeiten sind nicht Gegenstand dieser Anmeldung. Wie auch in Figur 2 umgeben bei Bedarf mehrere Gefahrenstellen 32 mehrere Maschinen 26 und/oder mehrere bewegliche Teilabschnitte einer Maschine 26.

Eine Gefahrenstelle 32 selbst wird vorzugsweise als frei von zu erfassenden Objekten 28 angesehen, oder vielmehr als durch die Maschine 26 blockiert. Tatsächlich wäre je nach Hüllkörper, der die Maschine 26 als Gefahrenstelle 32 modelliert, darin durchaus Raum für Objekte 28. Auch bildet die Maschine 26 natürlich selbst ein Objekt 28, das zunächst von dem 3D-Sensor 10 erfasst wird. Die Unterscheidung zwischen Maschine 26 und Objekt 28 innerhalb der Gefahrenstelle 32 wäre aber ausgesprochen schwierig und fehleranfällig, mit dem Ergebnis, dass der Abstand der Maschine 26 zu sich selbst berechnet wird und daraufhin eine unnötige Sicherheitsreaktion erfolgt. Indem vorzugsweise schon für die Objekterkennung die Gefahrenstelle 32 samt projektiven Verdeckungs- und Abschattungsbereichen ausmaskiert wird, spielt die Dynamik der Maschine 26 innerhalb der Gefahrenstelle 32 keine Rolle. Sicherheitstechnisch ist dies unproblematisch, denn jedes Objekt 28 wird rechtzeitig erkannt, wenn es sich einer Gefahrenstelle 32 nähert. Das Ausmaskieren betrifft nur Gefahrenstellen 32, die wenigstens teilweise im Sichtfeld des 3D-Sensors 10 liegen. Gefahrenstellen 32 außerhalb des Sichtfeldes werden hier nicht weiter betrachtet.

Im Prinzip wäre es schon sicher, eine einzige große Gefahrenstelle 32 starr unter Einschluss sämtlicher denkbaren Arbeitsbewegungen zu definieren. Das würde aber große Flächen beanspruchen und die Produktivität hemmen. Erfindungsgemäß ist deshalb vorgesehen, Gefahrenstellen 32 umzuschalten. Es werden jeweils Gefahrenstellen 32 für Teilabschnitte der Arbeitsbewegung definiert, die in einer dem Prozess entsprechenden Abfolge benutzt werden und die kleiner und besser angepasst sind. Dadurch wird eine wesentlich engere Kooperation ermöglicht, denn ein Werker kann derzeit inaktive Gefahrenstellen 32 betreten, ihre Flächen sind nicht über den gesamten Betrieb der Maschine 26 versiegelt. Bei der Umschaltung einer Sequenz von Gefahrenstellen 32, die einem Prozess der Maschine 26 folgt, müssen aber Vorkehrungen getroffen werden, um keine Objekte 28 zu übersehen, und dies wird nun erläutert.

Das Umschalten von Gefahrenstellen 32 lässt sich in einer bevorzugten Ausführungsform in drei Schritte unterteilen:
Erstens wird der Prozessablauf der Maschine 26 in Arbeitsschritte unterteilt, und für die Arbeitsschritte werden um die Arbeitsbereiche der Maschine 26 und die Verbindungswege möglichst nur die minimal notwendigen Gefahrenstellen 32 entsprechend der Bewegungsbahnen und Abläufe definiert. Dies erfolgt beispielsweise durch den Einrichter in einem Konfigurationstool, durch Import von einer Steuerung der Anlage, insbesondere eines Roboters, die beispielsweise dessen Arbeitsräume überträgt, oder durch eine Kombination, in der ein Import nachbearbeitet wird. Die Konfigurationen der Gefahrenstellen 32 werden vorzugsweise in dem 3D-Sensor 10 abgelegt, damit sie nicht zur Laufzeit übermittelt werden müssen.

Zweitens wird ein Ablaufprogramm erstellt, das eine Programmierung enthält, in welchem Prozessschritt welche Gefahrenstellen 32 aktiv oder inaktiv sind. Im Betrieb wird dieses Ablaufprogramm ausgeführt, so dass jeweils Gefahrenstellen 32 entsprechend dem Prozessablauf aktiviert werden. Alternativ wird der Prozessablauf nicht als Ganzes festgelegt, sondern es erfolgt dynamisch eine Umschaltung auf die Gefahrenstellenkonfiguration für einen nachfolgenden Arbeitsschritt. Die Reihenfolge der Arbeitsschritte ist dann nicht festgeschrieben. Bei der Umschaltung von Gefahrenstellen 32, insbesondere der Aktivierung neuer, zuletzt nicht überwachter Gefahrenstellen 32, wird überprüft, ob sich Objekte 28 in dem durch die neue Gefahrenstelle 32 ausmaskierten Bereich verbergen könnten.

Drittens bestimmt die Objektdetektion des 3D-Sensors wie schon erläutert während des Betriebs den Abstand des jeweils nächsten Objektes 28 zu den derzeit aktiven Gefahrenstellen 32. Bei mehreren aktiven Gefahrenstellen 32 werden parallel mehrere Abstände bestimmt. Auf Basis der kürzesten Abstände wird bewertet, ob eine sicherheitsgerichtete Reaktion eingeleitet werden muss.

Zur Veranschaulichung der anfänglichen Festlegung von Gefahrenstellen 32 für die jeweiligen Arbeitsschritte kann man sich als Beispiel eine Einlegeaufgabe vorstellen. Indem nicht permanent der gesamte Arbeitsbereich, sondern jeweils nur der für einen Arbeitsschritt notwendige Bereich durch aktive Gefahrenstellen 32 blockiert wird, können manuelle Tätigkeiten des Werkers in wechselseitig durch Mensch und Maschine zu nutzenden Bereichen ausgeführt werden. Beispielsweise wird, während einer Montageprozedur eines Roboters ein neues Set an Montageteilen in die Aufnahmestation eingebracht. Dementsprechend werden Gefahrenstellen 32 insbesondere unterschiedlicher Größen für den Montagebereich, die Aufnahmestation und die Verbindungswege definiert, um später im Betrieb abwechselnd verwendet zu werden. So wird über die Aktivierung und Deaktivierung von statisch eingerichteten Gefahrenstellen eine Dynamik im Prozess abgebildet.

Im Beispiel der Figur 2 ist die Maschine 26 ein Roboter. Die mit G1, G2, G3 bezeichneten Gefahrenstellen 32 sichern dessen bewegte Achsen ab, während die mit G1', G2' und G3' bezeichneten Gefahrenstellen den Zugang zum Roboter verhindern. Die Gefahrenstellen G1 und G3 stellen zwei Arbeitsstationen dar. Solange wie dargestellt der Roboter in der ersten Arbeitsstation in der Gefahrenstelle G1 arbeitet, sind die mit durchgezogenen Linien gezeichneten Gefahrenstellen G1, G2' und G3' aktiv. Dementsprechend würde auch der durch einen Pfeil symbolisierte kürzeste Abstand der Person 28 zur nächsten aktiven Gefahrenstelle G1 berechnet. Als zwei weitere beispielhafte Arbeitsschritte sind die Bewegung des Roboters in die zweite Arbeitsstation und die Arbeit dort in der Gefahrenstelle G3 vorgesehen. Zur Absicherung des Übergangs sollen die Gefahrenstellen G2 und G3 neu zur bereits aktiven Gefahrenstelle 1 aktiviert werden. Ist der Roboter in der Gefahrenstelle G3 angekommen, so sind nur noch die Gefahrenstellen G1', G2' und G3 aktiv. Für den sicheren Betrieb darf zu keinem Zeitpunkt ein Distanzgrenzwert für den Abstand zu aktiven Gefahrenstellen 32 unterschritten werden, was parallel für alle aktiven Gefahrenstellen 32 gilt. Der Distanzgrenzwert ist nicht zwingend konstant, sondern möglicherweise von Größen wie der Geschwindigkeit eines erfassten Objekts 28 oder auch der Maschine 26 beziehungsweise deren konkreten Arbeitsschritt abhängig.

Im Betrieb werden dann Gefahrenstellen 32 entsprechend dem zu den jeweiligen Arbeitsschritten der Maschine 26 passenden Ablaufprogramm aktiviert und deaktiviert. Da der Innenbereich einer Gefahrenstelle 32 ausmaskiert und damit nicht überwacht wird, muss vor der Aktivierung einer Gefahrenstelle 32 geprüft werden, ob deren Bereich frei von Objekten 28 ist. Ansonsten könnte ein Objekt 28 nach der Umschaltung ungesehen in der Gefahrenstelle 32 verschwinden.

Figur 3 zeigt eine Situation ähnlich Figur 2, in der aber nun der Roboter seine Arbeiten an der ersten Arbeitsstation in der Gefahrenstelle G1 beendet hat und sich in die zweite Arbeitsstation in der Gefahrenstelle G3 begeben möchte. Dazu müssten die Gefahrenstellen G2 und G3 aktiviert werden. Das ist aber nicht möglich, weil sich in der Gefahrenstelle G2 ein Objekt 28 befindet, nämlich ein Werker. Der Werker darf sich dort durchaus derzeit aufhalten, die Abstände zu den derzeit noch aktiven Gefahrenstellen G1, G2' sind groß genug. Für eine Umschaltung muss aber abgewartet werden, bis sich der Werker aus der Gefahrenstelle G2 und natürlich ebenso der Gefahrenstelle G3 entfernt hat. Dazu kann die Überprüfung, ob die neu zu aktivierenden Gefahrenstellen G2, G3 objektfrei sind, ständig wiederholt werden, gegebenenfalls verbunden mit einem Hinweis an das Umfeld, die Gefahrenstellen G2, G3 zu verlassen. Es ist auch denkbar, dass ein Alternativprogramm hinterlegt wird. Wenn die primär vorgesehene Umschaltung für einen Arbeitsschritt nicht möglich ist, wird ein alternativer Arbeitsschritt ausgeführt. Auch dafür sind Gefahrenstellen 32 vorkonfiguriert, vor deren Aktivierung auf Objektfreiheit geprüft werden muss.

Die eigentliche Überwachung innerhalb eines Arbeitsschrittes nach erfolgreicher Aktivierung der zugehörigen Gefahrenstellen 32 wurde oben schon erläutert. Der 3D-Sensor 10 bestimmt den minimalen Abstand des jeweils nächsten Objektes 28 zu den aktiven Gefahrenstellen 32 und überträgt diesen an eine angeschlossene Steuerung, insbesondere die Steuerung der Maschine 26. Dort wird auf Grundlage dieser Abstandsdaten eine optimale und sichere Systemreaktion erzeugt, sei es der fortgesetzte Betrieb in voller Prozessgeschwindigkeit, die Reduktion der Geschwindigkeit, eine Warnmeldung an den Bediener oder ein sicherer Stopp der Maschine.

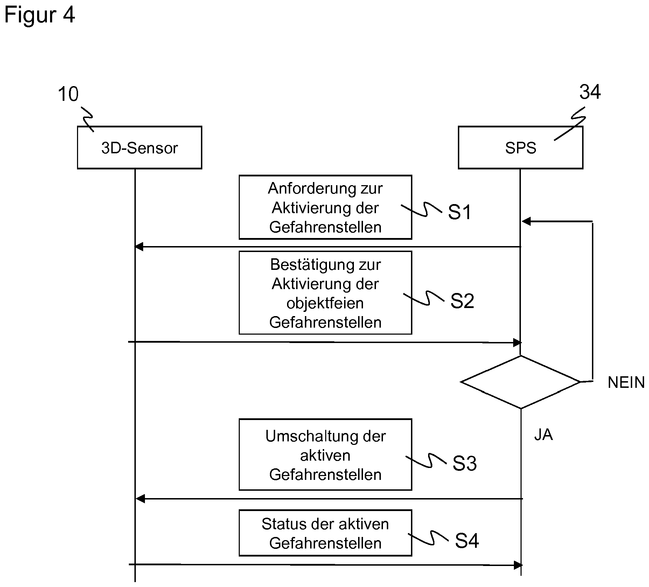

Figur 4 zeigt ein beispielhaftes Ablaufschema zwischen dem 3D-Sensor 10 und der angeschlossenen Steuerung 34 für eine Umschaltung von Gefahrenstellen 32. Ein entsprechender Ablauf findet mit mehreren 3D-Sensorsn 10 statt, sofern ein Sensorverbund eingesetzt ist. Dieser Ablauf betrifft vorzugsweise nur die Aktivierung von Gefahrenstellen, denn das ist der kritische Teil einer Umschaltung. Eine Deaktivierung nicht mehr benötigter Gefahrenstellen 32 kann zu jedem Zeitpunkt ohne weitere Umstände erfolgen, da der frei gewordene Bereich in Bezug auf die noch aktiven Gefahrenstellen 32 sofort zusätzlich auf Objekte 28 überwacht wird. Die Maschine 26 sollte aber den zu deaktivierenden Bereich sinnvollerweise verlassen haben, um auszuschließen, dass sie nun von der Objekterfassung als Person behandelt wird.

In einem Schritt S1 fragt die Steuerung 34 eine Aktivierung der neuen Gefahrenstellen 32 bei dem 3D-Sensor 10 an. Werden die Gefahrenstellen 32 durch einen Sensorverbund mit mehreren 3D-Sensoren abgesichert, so erfolgt der Ablauf parallel für alle 3D-Sensoren.

Die verbundenen 3D-Sensoren 10 prüfen jeweils, ob der Raumbereich der zu aktivierenden Gefahrenstellen 32 objektfrei ist und bestätigen dies der Steuerung 34 in einem Schritt S2. Ist ein Objekt in dem Bereich der neuen Gefahrenstellen 32 vorhanden, so bestätigt der 3D-Sensor 10 nicht beziehungsweise gibt eine entsprechende Rückmeldung. Der Prozess wird dann unterbrochen und die Anfrage wiederholt.

Haben alle angeschlossenen 3D-Sensoren 10 die Objektfreiheit bestätigt, so sendet die Steuerung 34 nun in einem Schritt S3 die Umschaltung. Sensorseitig erfolgt die Umschaltung nur, wenn sie in einem begrenzten Zeitfenster erfolgt und zur vorherigen Anfrage im Schritt S1 passt, also insbesondere dieselben zu aktivierenden Gefahrenstellen 32 betrifft.

In einem Schritt S4 bestätigt der 3D-Sensor 10 die Umschaltung an die Steuerung 34. Der rückgemeldete Status kann auch ein Fehlschlagen der Umschaltung signalisieren, etwa weil die gewünschte Umschaltung nicht der Voranfrage entspricht.

Ein solcher zweistufiger Ablauf der Umschaltung ist insbesondere für einen Sensorverbund mit mehreren 3D-Sensoren von Bedeutung und kein einzelner 3D-Sensor eine vollständige Sicht auf eine zu aktivierende Gefahrenstelle 32 hat. Erst nach abgestimmter Bestätigung der Objektfreiheit erfolgt eine parallele Umschaltung aller 3D-Sensoren. Das Prinzip ist auch denkbar, wenn andere Sensoren und nicht nur 3D-Sensoren in den Sensorverbund eingebunden sind

Alternativ zu einer zweistufigen Umschaltung können insbesondere bei einem einzelnen 3D-Sensor 10 die Gefahrenstellen 32 mit sofortiger Wirkung umgeschaltet werden. Wird dann bei der versuchten Umschaltung im 3D-Sensor 10 ein Objekt 28 detektiert, fallen die Gefahrenstellen 32 in den Zustand inaktiv zurück, und dies wird der Steuerung analog zu Schritt S4 über den Status der Gefahrenstellen 32 rückgemeldet.

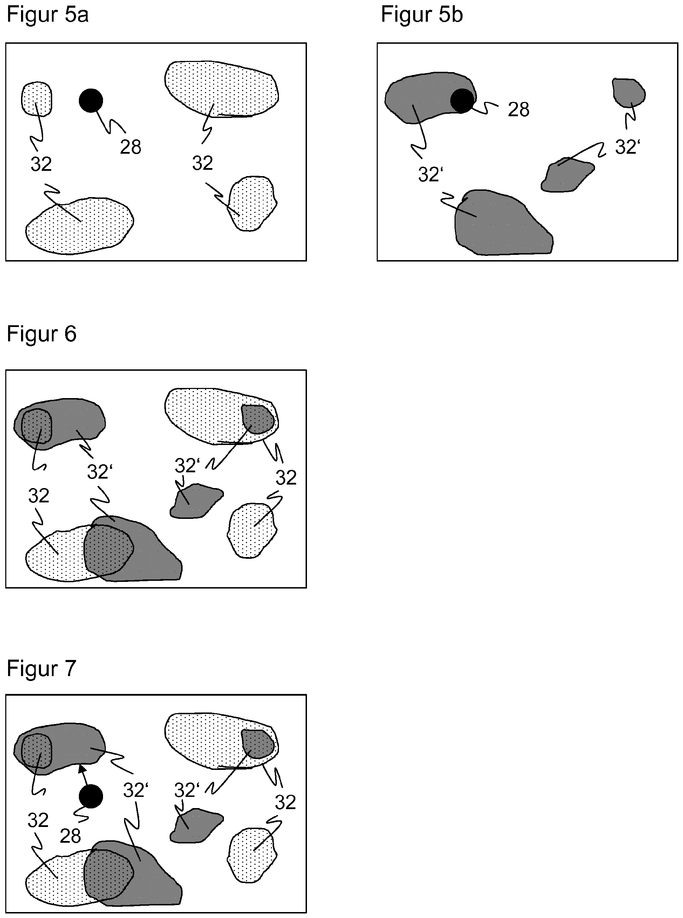

Unter Bezugnahme auf die Figuren 5a-b, 6 und 7 wird nun an einem Beispiel die Überprüfung auf Objektfreiheit noch etwas genauer beleuchtet. Dabei geht es vor allem um zwei Punkte. Zum einen werden Bereiche einer zu aktivierenden Gefahrenstelle 32', die sich mit einer bereits aktiven Gefahrenstelle 32 überlappen, vorzugsweise nicht auf Objektanwesenheit geprüft, sondern es wird nur der verbleibende exklusive Restbereich der zu aktivierenden Gefahrenstelle 32' ohne den Überlappungsbereich überprüft. Zum anderen benötigt die Umschaltung von Gefahrenstellen eine Prozesszeit, insbesondere nach Figur 4 zwischen der Rückmeldung in Schritt S2 und der tatsächlichen Umschaltung nach Schritt S3. Damit nicht ein Objekt 28, das sich ganz nahe an der zu aktivierenden Gefahrenstelle 32' befindet, in dieser Prozesszeit unbemerkt darin verschwindet, werden die zu aktivierenden Gefahrenstellen 32' für die Überprüfung auf Objektfreiheit um eine interne Toleranzzone erweitert.

Figur 5a zeigt ganz schematisch in heller Schattierung die aktiven Gefahrenstellen 32 in einer Draufsicht zu einem Zeitpunkt t, entsprechend Figur 5b in dunkler Schattierung die aktiven Gefahrenstellen 32' zu einem Zeitpunkt t' nach einer Umschaltung. Die jeweils von den Gefahrenstellen 32 zum Zeitpunkt t und von den Gefahrenstellen 32' zum Zeitpunkt t' ausmaskierten Bereiche werden mit M beziehungsweise M' bezeichnet. Ohne Prüfung auf Objektfreiheit würde das Objekt 28 nach der Umschaltung zum Zeitpunkt t' in einer Gefahrenstelle 32' verschwinden.

Figur 6 zeigt eine kombinierte Ansicht der Gefahrenstellen 32, 32' zu beiden Zeitpunkten t, t'. Auf Objektfreiheit geprüft werden vorzugsweise nicht die gesamten neu zu aktivierenden Gefahrenstellen 32' oder die Bereiche M', sondern lediglich der Anteil, der gegenüber den bereits aktiven Gefahrenstellen 32 oder den Bereichen M hinzukommt, d. h. damit nicht überlappt, oder Δ := M'\M. Sei ferner Det die Menge der erfassten Objektpunkte, dann ist zu prüfen, ob die Schnittmenge Φ := Δ n Det leer ist. Die Bereiche außerhalb von Gefahrenstellen 32, 32' sowie deren Überlappungsbereich M ∩ M' können ignoriert werden. Das gilt für den ersten Bereich, weil dieser sofort nach Aktivierung im nächsten Frame überprüft wird, und für den zweiten Bereich, weil dieser aufgrund der Definition einer Gefahrenstelle 32 und deren bisheriger Überwachung nur Maschinenteile enthalten kann.

Implementiert ist die Überprüfung in einer bevorzugten Ausführungsform mittels binärer Karten. Beispielsweise ist Det eine Detektionskarte, also ein zweidimensionales binäres Feld entsprechend der Pixel des 3D-Sensors 10, wobei gerade diejenigen Positionen mit Eins besetzt sind, wo relevante Objekte 28 erfasst wurden, und die übrigen Positionen mit Null. Die Gefahrenstellen 32, 32' können durch jeweilige Maskenkarten repräsentiert werden, die an den Positionen der Gefahrenstellen 32, 32' mit Einsen besetzt sind. Dann können Schnittmengen, Restmengen und dergleichen über einfache elementweise AND- und OR-Operationen gebildet werden. In einer besonders einfachen Ausführungsform wird ausgenutzt, dass die jeweilige aktuelle Detektionskarte ohnehin schon mit den aktiven Gefahrenstellen 32 gefiltert ist, also keine Objekte 28 in den Bereichen M enthält. Es genügt daher, diese Detektionskarte Det mit der Maskenkarte M' für die neuen Gefahrenstellen 32' elementweise mit AND zu verknüpfen und zu prüfen, ob danach noch irgendwo ein Pixel gesetzt bleibt, d. h. es wird so geprüft, ob die Schnittmenge Φ' := M' n Det leer ist. Dadurch werden implizit, aufgrund der Ausmaskierung der aktiven Gefahrenstellen 32 in der Objekterfassung, nur die hinzugekommenen Restbereiche M' \ M geprüft.

Figur 7 zeigt noch einmal überlagert die kombinierten Bereiche M, M' der aktiven und der neu zu aktivierenden Gefahrenstellen 32, 32'. Im Gegensatz zu Figur 6 befindet sich hier ein Objekt 28 nahe an dem Bereich einer zu aktivierenden Gefahrenstelle 32' und bewegt sich darauf zu. Es besteht die Gefahr, dass ein solches Objekt 28 unbemerkt während der Umschaltdauer in der Gefahrenstelle 32' verschwindet.

Um das zu vermeiden, wird bei der Überprüfung auf Objektfreiheit der Bereich M' der zu aktivierenden Gefahrenstellen 32' um eine Toleranz erweitert, die einer im Höchstfall von einem Objekt 28 innerhalb der Umschaltzeit bei einer angenommenen maximalen Objektgeschwindigkeit zurückgelegten Strecke entspricht. Diese Erweiterung erfolgt radial nach außen in alle Richtungen unter der Annahme, dass sich ein Objekt 28 aus irgendeiner Richtung direkt auf die Gefahrenstelle 32' zubewegt. Als Geschwindigkeit wird beispielsweise entsprechend den einleitend genannten Sicherheitsnormen eine typische höchste menschliche Gehgeschwindigkeit von 1,6 m/s angenommen. Alternativ zu solchen normgerechten worst-case-Szenarios kann die Bewegung von Objekten 28 aktiv überwacht werden, um sicherzustellen, dass kein Objekt eine Gefahrenstelle 32' innerhalb der Umschaltzeit erreichen wird.

Die Umschaltzeit entspricht der Summe der bekannten Ansprechzeiten von 3D-Sensor 10 und Steuerung 34. Als willkürliches Zahlenbeispiel sei die Umschaltzeit 100 ms, dann muss bei einer Objektgeschwindigkeit von höchstens 1,6 m/s der Toleranzpuffer 160 mm radial nach außen betragen. In einer realen Implementierung werden metrische Distanzen vorzugsweise in Pixel umgerechnet. Dabei hängt die Anzahl von Pixeln je lateraler metrischer Auflösung vom Abstand zu dem 3D-Sensor 10 ab, d. h. es passen mehr Pixel in eine bestimmte laterale metrische Strecke, je näher sich diese zu dem 3D-Sensor 10 befindet. Hier kann man als Abschätzung nach unten den kürzesten relevanten Abstand beispielsweise von 1,5 m bei Montagehöhe des 3D-Sensors von 3,5 m und einer Höhe des Erfassungsbereichs von 2 m über dem Boden annehmen. Diese Pixelanzahl deckt erst recht den Toleranzbereich in größerem Abstand zum 3D-Sensor 10 ab.

Die Erweiterung erfolgt nur außerhalb der schon aktiven Gefahrenstellen 32. Dazu wird beispielsweise zunächst M' um den Toleranzpuffer auf N' erweitert und dann die Restmenge N' \ M bestimmt. Ansonsten könnte die zu aktivierende Gefahrenstelle 32 in die schon aktiven Gefahrenstellen 32 hinein erweitert werden, die ja nicht objektfrei ist, sondern die Maschine 26 enthält. Analog zu den Ausführungen unter Bezugnahme auf die Figur 6 ist das in der aktuellen Detektionskarte bereits berücksichtigt, in der die erfassten Objekte bereits mit der Maske M der aktiven Gefahrenstellen 32 gefiltert sind. Folglich kann elementweise geprüft werden, ob N' n Det leer ist, und damit sind alle diskutierten Aspekte der Überlappung und des Toleranzpuffers berücksichtigt.

Bei der Erläuterung der bisherigen Ausführungsformen wurde angenommen, dass Gefahrenstellen 32 statisch vorkonfiguriert werden. Als Alternative können Gefahrenstellen 32 auch dynamisch zur Laufzeit aus Prozessparametern oder aus einem exemplarischen Ablauf des Prozesses zur Einrichtezeit automatisch ermittelt werden. Beispielsweise werden Aufenthaltsorte von Robotern mit 3D-Volumina modelliert. Die notwendigen Informationen stammen von der Robotersteuerung, aus einer Beschreibung des Roboters oder aus einer Überwachung des Roboters noch zur Konfigurationszeit mit dem 3D-Sensor 10 oder anderen Sensoren. Die Aufenthaltsbereiche oder daraus modellierten Aufenthaltsvolumina können als Gefahrenstellen 32 verwendet oder zumindest einer Konfiguration zugrunde gelegt werden.

## Patentansprüche

1. Verfahren zum Absichern mindestens einer Gefahrenstelle (32) einer gefahrbringenden Maschine (26), wobei die Maschine (26) zumindest teilweise als Gefahrenstelle (32) modelliert ist und wobei aus Messdaten mindestens eines 3D-Sensors (10) Objekte (28) in einer Umgebung (12) der Gefahrenstelle (32) erfasst werden und durch eine angeschlossene Steuer- und Auswertungseinheit (24) die Objekte in Bezug auf die Gefahrenstelle (32) bewertet werden und bei Vorliegen einer gefährlichen Situation eine sicherheitsgerichtete Reaktion der Maschine (26) ausgelöst wird,
**dadurch gekennzeichnet,**
**dass** in einem Speicher des 3D-Sensors (10) mindestens zwei Konfigurationssätze von Gefahrenstellen (32) gespeichert sind, dass während des Betriebs der Maschine (26) der kürzeste Abstand zwischen Gefahrenstelle (32) und Objekten (28) durch den 3D-Sensor (10) bestimmt wird und dass zum Umschalten von mindestens einer, aktuell im Prozessablauf benötigten Gefahrenstelle (32) zunächst eine Aktivierungsaufforderung an den 3D-Sensor (10) gestellt wird, der daraufhin prüft, ob die neu abzusichernde Gefahrenstelle (32') frei von Objekten ist und dies zurückmeldet, woraufhin nur bei freier neu abzusichernder Gefahrenstelle (32') die Umschaltung durch die Steuer- und Auswertungseinheit (24) erfolgt.

2. Verfahren nach Anspruch 1,
wobei der 3D-Sensor (10) den kürzesten Abstand zwischen Gefahrenstelle (32) und Objekten (28) an eine Steuerung (34) ausgibt, die anhand des kürzesten Abstands entscheidet, ob eine sicherheitsgerichtete Reaktion der Maschine (26) erfolgt.

3. Verfahren nach Anspruch 1 oder 2,
wobei beim Umschalten mindestens eine bisher abzusichernde Gefahrenstelle (32) deaktiviert wird.

4. Verfahren nach einem der vorhergehenden Ansprüche,
wobei bei der Erfassung von Objekten (28) durch den 3D-Sensor (10) Objekte (28) in der Gefahrenstelle (32) selbst ignoriert werden.

5. Verfahren nach Anspruch 4,
wobei auch Objekte (28) in einem projektiven Verdeckungsbereich der Gefahrenstelle (32) aus einer Zentralperspektive des 3D-Sensors (10) ignoriert werden.

6. Verfahren nach einem der vorhergehenden Ansprüche,
wobei die Prüfung, ob die neu abzusichernde Gefahrenstelle (32') frei von Objekten (28) ist, sich nicht auf einen Überlappungsbereich (M ∩ M') mit bisher abgesicherten Gefahrenstellen (32) erstreckt.

7. Verfahren nach einem der vorhergehenden Ansprüche,
wobei die Prüfung, ob die neu abzusichernde Gefahrenstelle (32') frei von Objekten (28) ist, einen Sicherheitspuffer um die neu abzusichernde Gefahrenstelle (32') einschließt, der aus einer benötigten Umschaltzeit und einer maximal angenommenen Objektgeschwindigkeit bestimmt wird.

8. Verfahren nach einem der vorhergehenden Ansprüche,
wobei für Arbeitsschritte der Maschine (26) mindestens zwei Konfigurationssätze von Gefahrenstellen (32) vorgegeben und für den jeweils zu vollziehenden nächsten Arbeitsschritt nacheinander auf die Gefahrenstellen (32) des zugehörigen Konfigurationssatzes umgeschaltet wird.

9. Verfahren nach einem der vorhergehenden Ansprüche,
wobei, falls die neu abzusichernde Gefahrenstelle (32') nicht frei von Objekten (28) ist, ein alternativer nächster Arbeitsschritt der Maschine (26) mit anderen abzusichernden Gefahrenstellen (32) folgt.

10. System zum Absichern mindestens einer Gefahrenstelle (32) einer gefahrbringenden Maschine (26), wobei die Maschine (26) zumindest teilweise als Gefahrenstelle (32) modelliert ist und das System dazu ausgebildet ist, Objekte (28) in Bezug auf die Gefahrenstelle zu bewerten und bei Vorliegen einer gefährlichen Situation eine sicherheitsgerichtete Reaktion der Maschine (26) auszulösen, umfassend eine Steuer- und Auswertungseinheit (24) sowie einen 3D-Sensor (10), wobei der 3D-Sensor (10) mindestens einen Bildsensor (16a-b) zum Erfassen von dreidimensionalen Bilddaten aufweist und dafür ausgebildet ist, Objekte (28) in der Umgebung (12) der Gefahrenstelle (32) anhand der dreidimensionalen Bilddaten zu erfassen,
**dadurch gekennzeichnet,**
**dass** der 3D-Sensor weiterhin dazu ausgebildet ist, den kürzesten Abstand zwischen Gefahrenstelle (32) und Objekten (28) zu bestimmen, und dass in einem Speicher des 3D-Sensors (10) mindestens zwei Konfigurationssätze von Gefahrenstellen (32) gespeichert sind und dass die Steuer- und Auswertungseinheit (24) dafür ausgebildet ist, zum Umschalten von mindestens einer, aktuell im Prozessablauf benötigten Gefahrenstelle (32) zunächst eine Aktivierungsaufforderung an den 3D-Sensor (10) zu stellen und weiterhin dazu ausgelegt ist, nur bei Empfang einer Zurückmeldung von dem 3D-Sensor (10), dass die neu abzusichernde Gefahrenstelle (32') frei von Objekten (28) ist, zwischen den Gefahrenstellen (32, 32') umzuschalten.

## Claims

1. A method for safeguarding at least one danger zone (32) of a dangerous machine (26), wherein the machine (26) is at least partially modelled as a danger zone (32) and wherein objects (28) in the vicinity (12) of the danger zone (32) are detected from measurement data of at least one 3D sensor (10) and the objects are evaluated with respect to the danger zone (32) by a connected control and evaluation unit (24), with a safety-related reaction of the machine (26) being triggered in case of a dangerous situation,
**characterized in that** at least two configuration sets of danger zones (32) are stored in a memory of the 3D sensor (10), **in that**, during operation of the machine (26), the shortest distance between danger zone (32) and objects (28) is determined by the 3D sensor (10), and **in that**, in order to switch over at least one danger zone (26) that currently is needed in the process flow, an activation request is sent to the 3D sensor (10), which then checks whether the danger zone (32') to be newly safeguarded is free of objects and reports this back, whereupon the switchover by the control and evaluation unit (24) only takes place if the danger zone (32') to be newly safeguarded is free.

2. The method according to Claim 1,
wherein the 3D sensor (10) outputs the shortest distance between danger zone (32) and objects (28) to a control (34), which uses the shortest distance to decide whether there is a safety-related reaction of the machine (26).

3. The method according to claim 1 or 2,
wherein at least one danger zone (32) previously to be safeguarded is deactivated during the changeover.

4. The method according to one of the preceding claims,
wherein objects (28) in the danger zone (32) are ignored during the detection of objects (28) by the 3D sensor (10).

5. The method according to claim 4,
wherein objects (28) in a projective shadow area of the danger zone (32) from a central perspective of the 3D sensor (10) are also ignored.

6. The method according to any of the preceding claims,
wherein the check whether the danger zone (32') to be newly safeguarded is free of objects (28) does not extend to an overlap area (M ∩ M') with previously safeguarded danger zones (32).

7. The method according to any of the preceding claims,
wherein the check whether the danger zone (32') to be newly safeguarded is free of objects (28) includes a safety buffer around the danger zone (32') to be newly safeguarded, which is determined from a required switchover time and a maximum assumed object speed.

8. The method according to any of the preceding claims,
wherein for processing steps of the machine (26) at least two configuration sets of danger zones (32) are specified and the machine (26) is successively switched over to the danger zones (32) of the associated configuration set for the respective next processing step to be carried out.

9. The method according to any of the preceding claims,
wherein, if the danger zone (32') newly to be safeguarded is not free of objects (28), there follows an alternative next processing step of the machine (26) with other danger zones (32) to be safeguarded.

10. A system for safeguarding at least one danger zone (32) of a dangerous machine (26), wherein the machine (26) is at least partially modelled as a danger zone (32) and the system is configured to evaluate objects (28) with respect to the danger zone and, in case of a dangerous situation, to trigger a safety-related reaction of the machine (26), the system comprising a control and evaluation unit (24) and a 3D sensor (10), wherein the 3D sensor (10) comprises at least one image sensor (16a-b) for detecting three-dimensional image data and is configured to detect objects (28) in the vicinity (12) of the danger zone (32) on the basis of the three-dimensional image data,
**characterized in that** the 3D sensor is further configured to determine the shortest distance between danger zone (32) and objects (28), **in that** at least two configuration sets of danger zones (32) are stored in a memory of the 3D sensor (10), and **in that** the control and evaluation unit (24) is configured to send an activation request to the 3D sensor (10) for a switchover of at least one danger zone (32) that is currently needed in the process flow, and is further configured to switch over between the danger zones (32, 32') only on receipt of a feedback from the 3D sensor (10) that the danger zone (32') newly to be safeguarded is free of objects (28).

## Revendications

1. Procédé de sécurisation d'au moins un emplacement de danger (32) d'une machine dangereuse (26), dans lequel la machine (26) est au moins partiellement modelée en tant qu'emplacement de danger (32), et des objets (28) se trouvant dans un environnement (12) de l'emplacement de danger (32) sont détectés à partir de données de mesure d'au moins un capteur 3D (10), et les objets sont évalués par rapport à l'emplacement de danger (32) par une unité de commande et d'évaluation (24) connectée, et, en présence d'une situation dangereuse, une réaction, relative à la sécurité, de la machine (26) est déclenchée,
**caractérisé en ce que**
au moins deux jeux de configurations d'emplacements de danger (32) sont stockés dans une mémoire du capteur 3D (10), **en ce que** pendant le fonctionnement de la machine (26), la distance la plus courte entre l'emplacement de danger (32) et des objets (28) est déterminée par le capteur 3D (10), et **en ce que** pour commuter depuis au moins un emplacement de danger (32) actuellement nécessaire dans le déroulement du processus, tout d'abord une demande d'activation est adressée au capteur 3D (10) qui vérifie alors si l'emplacement de danger (32') à sécuriser nouvellement est exempt d'objets et qui signale ceci, suite à quoi la commutation n'est alors effectuée par l'unité de commande et d'évaluation (24) que si l'emplacement de danger à sécuriser nouvellement est exempt d'objets.

2. Procédé selon la revendication 1,
dans lequel le capteur 3D (10) détermine la distance la plus courte entre l'emplacement de danger (32) et les objets (28) et la transmet à un contrôleur (34) qui utilise la distance la plus courte pour décider si une réaction, relative à la sécurité, de la machine (26) aura lieu.

3. Procédé selon la revendication 1 ou 2,
dans lequel lors de la commutation, au moins un emplacement de danger (32) à sécuriser jusqu'à présent est désactivé.

4. Procédé selon l'une des revendications précédentes,
dans lequel lors de la détection d'objets (28) par le capteur 3D (10), les objets (28) se trouvant dans l'emplacement de danger (32) lui-même sont ignorés.

5. Procédé selon la revendication 4,
dans lequel les objets (28) dans une zone de masquage projective de l'emplacement de danger (32) à partir d'une perspective centrale du capteur 3D (10) sont également ignorés.

6. Procédé selon l'une des revendications précédentes,
dans lequel la vérification pour savoir si l'emplacement de danger (32') à sécuriser nouvellement est exempt d'objets (28) ne concerne pas une zone de chevauchement (M ∩ M') avec des emplacements de danger (32) sécurisés jusqu'à présent.

7. Procédé selon l'une des revendications précédentes,
dans lequel la vérification pour savoir si l'emplacement de danger (32') à sécuriser nouvellement est exempt d'objets (28) inclut un tampon de sécurité autour de l'emplacement de danger (32') à sécuriser nouvellement, tampon qui est déterminé à partir d'un temps de commutation requis et d'une vitesse maximale supposée de l'objet.

8. Procédé selon l'une des revendications précédentes,
dans lequel pour des étapes de travail de la machine (26), au moins deux jeux de configurations d'emplacements de danger (32) sont spécifiés et, pour l'étape de travail respective suivante à effectuer, il est prévu de commuter successivement vers les emplacements de danger (32) du jeu de configurations associé.

9. Procédé selon l'une des revendications précédentes,
dans lequel au cas où l'emplacement de danger (32') à sécuriser nouvellement n'est pas exempt d'objets (28), il est prévu une étape de travail suivante alternative de la machine (26) avec d'autres emplacements de danger (32) à sécuriser.

10. Système de sécurisation d'au moins un emplacement de danger (32) d'une machine dangereuse (26), dans lequel la machine (26) est au moins partiellement modelée en tant qu'emplacement de danger (32), et le système est réalisé pour évaluer des objets (28) par rapport à l'emplacement de danger (32) et pour déclencher, en présence d'une situation dangereuse, une réaction, relative à la sécurité, de la machine (26),
comprenant une unité de commande et d'évaluation (24) ainsi qu'un capteur 3D (10), le capteur 3D (10) comprenant au moins un capteur d'images (16a-b) pour acquérir des données d'image tridimensionnelles et étant réalisé pour détecter des objets (28) se trouvant dans l'environnement (12) de l'emplacement de danger (32) sur la base des données d'image tridimensionnelles,
**caractérisé en ce que**
le capteur 3D est en outre réalisé pour déterminer la distance la plus courte entre l'emplacement de danger (32) et des objets (28), et **en ce que** au moins deux jeux de configurations d'emplacements de danger (32) sont stockés dans une mémoire du capteur 3D (10), et **en ce que** pour commuter depuis au moins un emplacement de danger (32) actuellement nécessaire dans le déroulement du processus, l'unité de commande et d'évaluation (24) est réalisée pour adresser tout d'abord une demande d'activation au capteur 3D (10), et elle est en outre conçue pour commuter entre les emplacements de danger (32, 32') uniquement à la réception d'un signal de retour du capteur 3D (10) indiquant que l'emplacement de danger (32') à sécuriser nouvellement est exempt d'objets (28).
